# FASCICULE DE BREVET EUROPEEN

(11) **EP 3 059 144 B1**
(45) Date de publication et mention de la délivrance du brevet: **01.08.2018**
(21) Numéro de dépôt: 16156572.6
(22) Date de dépôt: 19.02.2016
(51) Int. Cl.: B62D 27/04, B60R 13/02, B62D 25/24, B60K 37/00

(54) **ENSEMBLE STRUCTUREL DE VÉHICULE COMPRENANT UN CORPS PRINCIPAL ET UN ÉLÉMENT D'OBTURATION ANCRÉ DANS LEDIT CORPS PRINCIPAL ET APTE À ÊTRE DÉMONTÉ**
STRUKTURANORDNUNG FÜR EIN FAHRZEUG MIT EINEM HAUPTKÖRPER UND EINEM VERSCHLUSSELEMENT AM HAUPTKÖRPER ANGEBRACHT UND AUSGEBAUTBAR
STRUCTURAL ASSEMBLY FOR A VEHICLE COMPRISING A MAIN BODY AND A CLOSING ELEMENT ATTACHED TO THE MAIN BODY AND ABLE TO BE DISMOUNTED

(30) Priorité: 20.02.2015 FR 1551455
(43) Date de publication de la demande: 24.08.2016
(73) Titulaire: Faurecia Intérieur Industrie, 92000 Nanterre (FR)
(72) Inventeur: FABRIS, Stéphane, 95260 MOURS (FR); DEBRIE, Walter, 60110 MERU (FR)
(74) Mandataire: Lavoix

(56) Documents cités:
- WO-A2-2006/134477
- FR-A1- 2 589 406
- FR-A1- 2 845 061
- US-B1- 6 299 177

## Description

La présente invention concerne un ensemble structurel pour véhicule du type comprenant un corps principal pourvu d'une ouverture et un élément d'obturation de l'ouverture s'étendant dans ladite ouverture, et étant fixé au corps principal par au moins un élément de fixation, l'élément d'obturation étant mobile en translation selon une direction d'ouverture par rapport au corps principal entre une position de fermeture et une position d'ouverture, l'élément d'obturation comprenant un élément d'ancrage introduit dans un orifice du corps principal et étant apte à retenir l'élément d'obturation sur le corps principal en cas de désolidarisation de l'élément de fixation.

Dans un tel ensemble, le corps principal est par exemple un corps de planche de bord et l'élément d'obturation est par exemple un volet ou couvercle de trappe d'accès à des éléments fonctionnels du véhicule disposés dans le volume interne du corps de planche de bord.

Dans un tel ensemble, il est nécessaire que l'élément d'obturation puisse être démonté du corps principal afin de permettre à un utilisateur d'accéder au volume interne du corps principal.

WO 2006/134477 A2 décrit une valve montée dans une ouverture. FR 2845061 A1 décrit une trappe d'obturation d'une fenêtre d'accès de pare-boue avec les caractéristiques du préambule de la revendication 1. Cependant, afin de permettre l'ouverture de l'élément d'obturation, il est nécessaire de prévoir des moyens de fixation moins robustes que si l'élément d'obturation était fixé à demeure et de façon inamovible au corps principal. Par conséquent, en cas de choc contre le corps principal, les moyens de fixation sont susceptibles de se rompre et l'élément d'obturation risque de se désolidariser du corps principal. Dans ce cas, l'élément d'obturation est éjecté du corps principal et est projeté dans l'habitacle du véhicule, ce qui constitue un risque important de blessures pour les occupants du véhicule.

Il est connu d'assurer un ancrage d'un élément d'obturation sur un corps principal afin d'éviter l'éjection de l'élément d'obturation en cas de choc. Cet ancrage est assuré par un élément d'ancrage prévu en plus des moyens de fixation de l'élément d'obturation sur le corps principal. Le document FR-2 968 736 décrit par exemple un tel élément d'ancrage.

Cet élément d'ancrage n'est cependant pas satisfaisant car il existe un risque d'un démontage intempestif de l'élément d'obturation lorsque celui-ci n'est retenu sur le corps principal que par l'élément d'ancrage. En effet, dans ce cas, une simple poussée sur l'élément d'obturation suffit pour désengager l'élément d'ancrage et ainsi désolidariser l'élément d'obturation du corps principal. Cette poussée pourrait être réalisée par inadvertance par un utilisateur lorsqu'il souhaite accéder au volume interne du corps principal ou lors d'un choc, ce qui pourrait constituer un risque pour les occupants du véhicule.

L'un des buts de l'invention est de pallier ces inconvénients en proposant un ensemble structurel comprenant un élément d'obturation mobile et démontable, tout en restant solidaire du corps principal en cas de choc contre ce corps.

A cet effet, l'invention concerne un élément structurel du type précité, dans lequel ledit élément d'ancrage autorise une rotation de l'élément d'obturation par rapport au corps principal autour d'un axe de rotation sensiblement parallèle à la direction d'ouverture lorsque l'élément d'obturation est dans la position d'ouverture.

En prévoyant que l'élément d'ancrage apte à tourner dans l'orifice du corps principal, il est possible de prévoir une position de démontage de l'élément d'obturation qui ne peut être atteinte que par rotation d'un angle minimal de l'élément d'obturation. Une telle rotation n'est réalisée que de façon volontaire par un utilisateur et a peu de chance de se produire par inadvertance ou lors d'un choc. Ainsi, l'élément d'ancrage peut remplir de façon optimale sa fonction de retenue de l'élément d'obturation sur le corps principal en cas de désolidarisation de l'élément de fixation.

Selon d'autres caractéristiques de l'ensemble structurel selon l'invention :
- l'élément d'obturation est mobile en rotation atour de l'axe de rotation entre une position d'ancrage, dans laquelle l'élément d'ancrage retient l'élément d'obturation sur le corps principal lorsque l'élément d'obturation est dans la position d'ouverture, et une position de démontage, dans laquelle l'élément d'ancrage peut être retiré de l'orifice du corps principal pour séparer l'élément d'obturation du corps principal ;
- l'élément d'ancrage est mobile en translation selon la direction d'ouverture dans l'orifice du corps principal lorsque l'élément d'obturation se déplace entre la position d'ouverture et la position de fermeture ;
- l'élément d'ancrage présente la forme d'une ancre comprenant au moins un épaulement apte à coopérer avec un bord de l'orifice du corps principal pour retenir l'élément d'obturation sur le corps principal en cas de désolidarisation de l'élément de fixation ;
- l'élément de fixation est mobile en translation selon une direction de déverrouillage sensiblement perpendiculaire à la direction d'ouverture entre une position verrouillée dans laquelle l'élément de fixation coopère avec un logement correspondant du corps principal et une position déverrouillée dans laquelle l'élément de fixation est retiré du logement lors du passage de l'élément d'obturation de la position de fermeture à la position d'ouverture ;
- l'élément d'ancrage se déplace en translation dans l'orifice du corps principal selon la direction de déverrouillage et maintient l'élément d'obturation sur le corps principal lorsque l'élément de fixation est déplacé entre sa position verrouillée et sa position déverrouillée ;
- l'élément de fixation ne fixe pas l'élément d'obturation au corps principal dans la position d'ouverture ;
- l'élément d'obturation comprend une pluralité d'éléments de fixation, dont au moins un coopère avec le corps principal par encliquetage ;
- l'élément d'ancrage présente une longueur, mesurée selon la direction d'ouverture, supérieure à la longueur de l'élément de fixation ;
- le corps principal est un corps de planche de bord de véhicule et dans lequel l'élément d'obturation est un couvercle de trappe d'accès à un élément fonctionnel disposé dans le corps de planche de bord.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective d'une partie d'un ensemble structurel selon l'invention vu de l'extérieur, l'élément d'obturation étant en position fermée,
- la Fig. 2 est une représentation schématique de l'élément d'obturation de l'ensemble structurel de la Fig. 1,
- la Fig. 3 est une représentation schématique en perspective de l'ensemble structurel de la Fig. 1, vu de l'intérieur,
- les Fig. 4 à 6 sont des représentations schématiques en perspective de l'ensemble structurel de la Fig. 1 à différentes étapes du passage de la position fermée à la position ouverte et à la position de démontage.

En référence aux figures, on décrit un ensemble structurel de véhicule comprenant un corps principal 2 et un élément d'obturation 4 s'étendant dans une ouverture 6 du corps principal 2.

Le corps principal 2 est par exemple une planche de bord de véhicule et l'élément d'obturation 4 est par exemple le couvercle ou le volet d'une trappe d'accès, dite « trappe conducteur », destinée à s'étendre du côté du conducteur du véhicule, sous le volant de celui-ci. Il est entendu que les éléments ci-dessus ne sont que des exemples de réalisation et que le corps principal 2 et l'élément d'obturation 4 pourraient être formés par d'autres éléments d'un véhicule dès lors que l'élément d'obturation s'étend dans une ouverture du corps principal et est mobile par rapport à celui-ci, comme cela va être décrit ultérieurement. Cependant, à des fins de simplification, la description suivante sera faite dans le cadre d'un corps de planche de bord et d'un couvercle de trappe d'accès.

Le corps principal 2 définit un volume interne recevant des éléments fonctionnels du véhicule, tels que la colonne de direction et une partie du câblage électrique du véhicule. Ces éléments fonctionnels sont masqués par le corps principal 2 de sorte à n'être pas visibles depuis l'habitacle du véhicule, mais doivent rester accessibles pour des opérations de maintenance du véhicule.

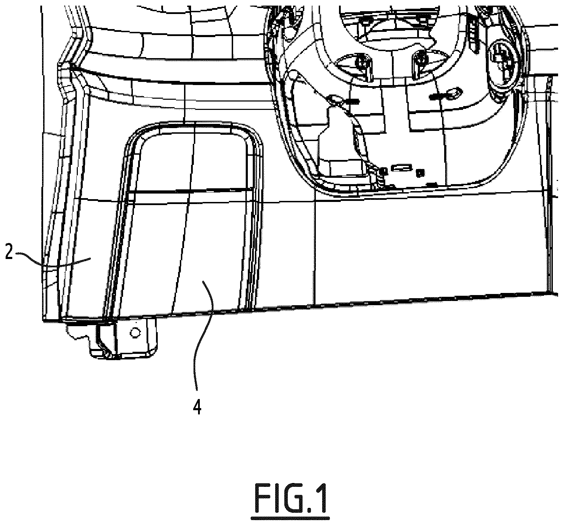

L'élément d'obturation 4 est formé par une paroi principale 8 s'étendant et fermant l'ouverture 6, dans la position fermée de l'élément d'obturation 4. La face externe 10 de la paroi principale 8, c'est-à-dire la face tournée vers l'habitacle du véhicule, s'étend sensiblement dans la continuité de la face externe du corps principal 2, lorsque l'élément d'obturation 4 est dans la position fermée, comme représenté sur la Fig. 1, de sorte que l'ouverture 6, et donc ce qui s'étend dans le volume interne du corps principal en regard de l'ouverture 6, est masquée par la paroi principale 8. La paroi principale comprend également une face interne 12, opposée à la face externe et tournée vers le volume interne du corps principal 2.

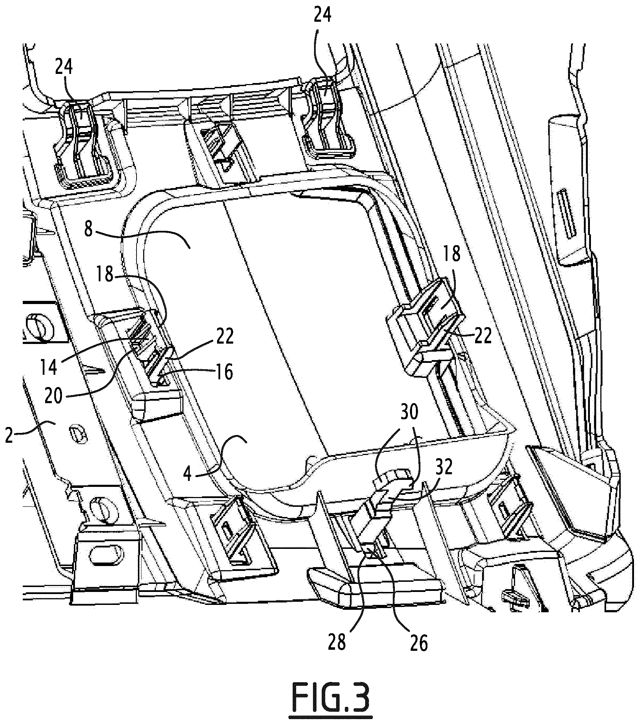

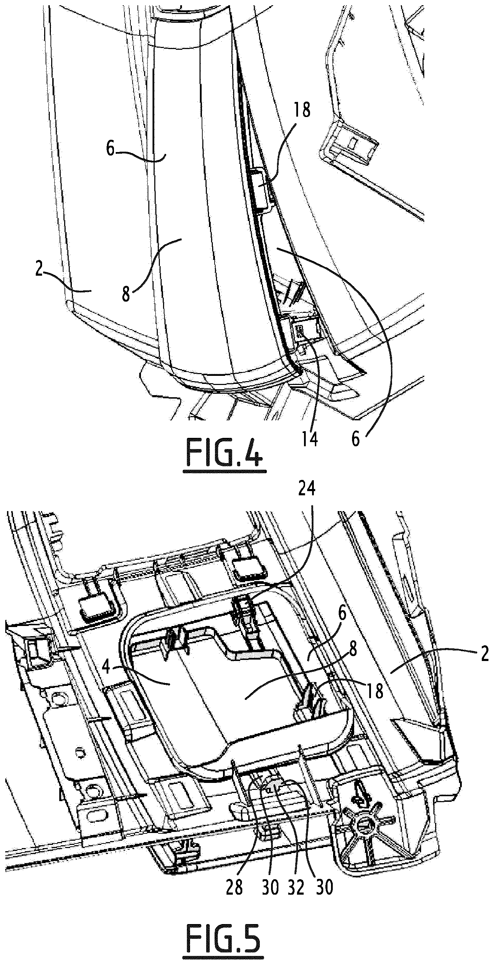

Afin de rendre accessible les éléments fonctionnels disposés dans le volume interne du corps principal 2 pour un utilisateur du véhicule, par exemple le conducteur dans le cas d'une trappe conducteur, l'élément d'obturation 4 est mobile par rapport au corps principal 2 entre une position fermée, représentée sur les Fig. 1 et 3, dans laquelle la paroi principale 8 obture l'ouverture 6, comme décrit précédemment, et une position ouverte, notamment représentée sur la Fig. 5, dans laquelle la paroi principale 8 est dégagée de l'ouverture 6 et rend le volume interne du corps principal 2 accessible par l'ouverture 6. Une telle position est par exemple nécessaire lorsqu'un accès à un fusible disposé en regard de l'ouverture 6 dans le volume interne du corps principal 2 doit être ménagé.

En position fermée, l'élément d'obturation 4 est retenu sur le corps principal 2 par au moins un élément de fixation 14 coopérant avec un logement 16 correspondant du corps principal 2. L'élément de fixation 14 est agencé pour pouvoir être introduit dans le logement correspondant 16 lors du montage de l'élément d'obturation 4 sur le corps principal 2, pour pouvoir fermement maintenir l'élément d'obturation 4 immobile sur le corps principal 2 et pour pouvoir sortir du logement 16, par exemple à l'aide d'un outil, lors du passage à la position d'ouverture. Plus particulièrement, l'élément de fixation 14 est agencé pour maintenir une coopération avec le logement 16 tant qu'une opération volontaire de l'utilisateur n'est pas effectuée. Cette opération est par exemple l'utilisation d'un outil ou une opération de désengagement nécessitant une manipulation particulière de l'élément de fixation 14.

Ainsi, l'élément de fixation 14 est par exemple un élément d'encliquetage 18 comprenant une ou plusieurs pattes 20 s'étendant à partir d'un bras 22 s'étendant en saillie de la face interne 12 de la paroi principale 8 selon une direction sensiblement perpendiculaire à celle-ci. Le bras 20 présente une certaine élasticité de sorte que lors de l'introduction de l'élément d'encliquetage 18, la ou les pattes peuvent s'introduire dans le logement correspondant 16 et de sorte qu'en position fermée, la patte ou les pattes 20 coopèrent avec le ou les bords du logement 16 pour retenir l'élément d'obturation 4 sur le corps principal 2. Dans ce cas, le passage à la position d'ouverture nécessite de faire sortir la ou les pattes 20 du logement 16.

L'élément de fixation 14 peut également être formé par une patte 24, s'étendant en saillie d'un bord de la paroi principale 8 selon une direction sensiblement parallèle à cette paroi principale 8 et s'introduisant dans le logement 16 selon une direction sensiblement perpendiculaire à la direction de maintien de l'élément d'obturation 4 sur le corps principal 2. La direction de maintien est sensiblement perpendiculaire à l'ouverture 6 et la direction d'introduction de la patte 24 est sensiblement parallèle à l'ouverture 6. En position fermée, la patte 24 repose sur le bord du logement 16 et empêche la sortie de l'élément de fixation 14 du logement 16. L'élément de fixation 14 est alors dans une position verrouillée. Pour passer à la position d'ouverture, un utilisateur doit faire subir une translation à la patte 24 dans direction de déverrouillage, dans le sens opposée à la direction d'introduction pour permettre la sortie de la patte 24 du logement 16. L'élément de fixation 14 est alors dans une position déverrouillée.

Selon le mode de réalisation représenté sur les figures, l'élément d'obturation 4 comprend une pluralité d'éléments de fixation 14, répartis sur les bords de l'élément d'obturation 4, certains de ces éléments de fixation étant des éléments d'encliquetage 18 et d'autres étant des pattes 24, tels que décrits ci-dessus. Ces éléments de fixation 14 permettent une fixation robuste de l'élément d'obturation 4 sur le corps principal 2 et répartie sur tout le pourtour de l'élément d'obturation 4, comme représenté sur les Fig. 1 et 3.

Le passage de la position fermée à la position ouverte se fait par translation selon une direction d'ouverture, sensiblement perpendiculaire à l'ouverture 6 et à la paroi principale 8 dans la position fermée après avoir désengagé les éléments de fixation 14 des logements 16 correspondants à l'aide d'un outil ou par une manipulation volontaire de l'utilisateur.

Afin d'éviter la désolidarisation complète de l'élément d'obturation 4 en cas de désolidarisation du ou des éléments de fixation 14 en cas de choc ou lorsque l'élément d'obturation 4 est dans la position d'ouverture, l'élément d'obturation 4 est en outre fixé au corps principal 2 par un élément d'ancrage 26. Par désolidarisation de l'élément de fixation 14, on entend une sortie involontaire de l'élément de fixation 14 du logement correspondant 16 ou la brisure d'une des parties de l'élément de fixation 14 entraînant une désolidarisation entre l'élément d'obturation 4 et le corps principal 2 au niveau de cet élément de fixation 14. Une telle désolidarisation peut survenir lorsque l'élément d'obturation 4 est déplacé dans la position d'ouverture ou en cas de choc contre le corps principal 2 et/ou contre l'élément d'obturation 4.

L'élément d'ancrage 26 est reçu dans un orifice 28 correspondant du corps principal 2 et est agencé pour retenir l'élément d'obturation 4 en coopérant avec le corps principal 2 en cas de désolidarisation de l'élément de fixation 14 ou lorsque l'élément d'obturation 4 est en position d'ouverture.

A cet effet, l'élément d'ancrage 26 présente par exemple la forme d'une ancre de retenue comprenant au moins un épaulement 30 s'étendant à l'extrémité libre d'un bras 32, ce bras 32 s'étendant en saillie de la face interne 12 de la paroi principale 8 selon une direction sensiblement perpendiculaire à cette paroi principale 8, par exemple au voisinage d'un des bords de la paroi principale 8. Selon le mode de réalisation représenté sur les figures, l'élément d'ancrage 26 comprend deux épaulements 30 s'étendant de part et d'autre du bras 32. Les épaulements 32 sont agencés pour assurer la retenue de l'élément d'ancrage 26 dans l'orifice 28. La distance séparant l'extrémité libre des épaulements 30 est ainsi choisie pour être supérieure à la largeur de l'orifice 28 de sorte que les épaulements 30 sont retenus par les bords de l'orifice 28 lorsque l'élément d'obturation 4 est écarté du corps principal 2 assurant ainsi l'ancrage de l'élément d'obturation 4 dans le corps principal 2. En effet, l'appui des épaulements 30 contre les bords de l'orifice 28 empêche le retrait de l'élément d'ancrage 26 de l'orifice 28, ce qui assure que l'élément d'obturation 4 reste solidaire du corps principal 2 même lorsque les éléments de fixation 14 n'assurent plus cette solidarisation.

La longueur du bras 32 et donc de l'élément d'ancrage 26, mesurée selon la direction d'ouverture, c'est-à-dire selon la direction dans laquelle s'étend le bras 32, est agencée pour permettre le passage de l'élément d'obturation 4 de la position de fermeture à la position d'ouverture. Ainsi, les épaulements 30 de l'élément d'ancrage 26 ne prennent appui contre les bords de l'orifice 28 que lorsque l'élément d'obturation 4 est en position d'ouverture, comme représenté sur la Fig. 5, ou lorsque le ou les éléments de fixation 14 sont désolidarisés. Dans la position de fermeture, les épaulements 32 s'étendent à distance des bords de l'orifice 28, comme représenté sur la Fig. 3. Plus particulièrement, la longueur du bras 32 est supérieure à la longueur, mesurée selon la direction d'ouverture, du ou des éléments de fixation 14. Ainsi, lorsque les éléments de fixation 14 sont sortis des logements 16, l'élément d'obturation 4 présente une certaine plage de déplacement en translation selon la direction d'ouverture vers la position d'ouverture avant que les épaulements 32 prennent appui contre les bords de l'orifice 28. La différence de longueur entre l'élément d'ancrage 26 et le ou les éléments de fixation 14 permet de définir ce débattement, qui est choisi pour que l'ouverture 6 soit suffisamment accessible dans la position d'ouverture de l'élément d'obturation 4 pour un accès au volume interne du corps principal 2.

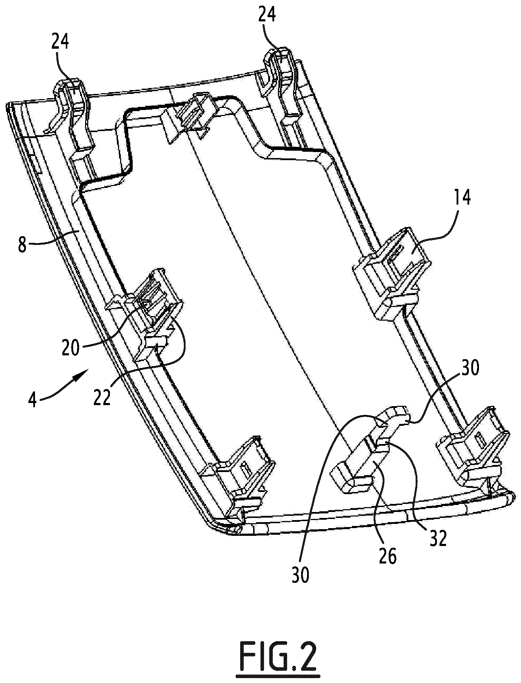

Il convient de noter que lorsque l'élément de fixation ou l'un des éléments de fixation est formé par une patte 24 telle que décrite précédemment, l'orifice 28 est agencé pour permettre une translation de l'élément d'ancrage 26 selon la direction de déverrouillage de la patte 24 dans le logement 16 correspondant. A cet effet, comme représenté sur la Fig. 2, la patte 24 et l'élément d'ancrage 26 sont disposés sur des bords opposés de la paroi principale 8 sensiblement perpendiculaires à la direction de déverrouillage de la patte 24 et à la direction d'ouverture. L'orifice 28 présente, quant à lui, la forme d'une fente s'étendant selon la direction de déverrouillage et permettant le déplacement selon cette direction de l'élément d'ancrage 26 dans l'orifice 28 de sorte à permettre l'insertion et le retrait de la patte 24 de son logement 16.

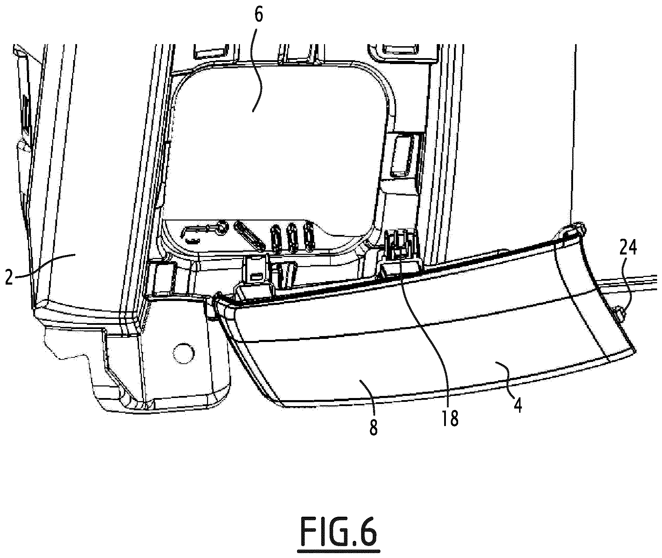

L'élément d'ancrage 26 est en outre mobile en rotation autour d'un axe sensiblement parallèle à la direction d'ouverture, lorsque le ou les éléments de fixation ne coopèrent pas avec leur logement 16 correspondant. L'élément d'ancrage 26 est mobile entre une position d'ancrage, dans laquelle les épaulements 32 s'étendent en regard des bords de l'orifice 28 et sont susceptibles de coopérer avec ceux-ci pour maintenir l'élément d'obturation 4 dans la position d'ouverture ou lorsque les éléments de fixation 14 sont désolidarisés, et une position de démontage représentée sur la Fig. 6, dans laquelle les épaulements 32 s'étendent en regard de l'ouverture de l'orifice 28 de sorte que l'élément d'ancrage 26 peut sortir de l'orifice 28 dans cette position. Selon le mode de réalisation représenté sur les figures, l'angle de rotation subit par l'élément d'ancrage 26 entre la position d'ancrage et la position de démontage est de 90°, de sorte que cette rotation ne peut résulter que d'une action volontaire de l'utilisateur et est peu susceptible d'arriver involontairement. Cet angle pourrait être différent mais il est préférable qu'il soit suffisamment grand pour éviter toute rotation involontaire de l'élément d'obturation 4.

Pour monter l'élément d'obturation 4 sur le corps principal 2, l'élément d'ancrage 26 est d'abord introduit dans l'orifice 28. Pour ce faire, l'élément d'obturation 4 est approché du corps principal 2 dans la position de démontage, de sorte que les épaulements 30 peuvent être introduits dans l'orifice 28, puis l'élément d'ancrage 26 est tourné pour passer dans la position d'ancrage, assurant ainsi une retenue de l'élément d'obturation 4 sur le corps principal 2.

L'élément d'obturation 4 est ensuite déplacé en translation selon la direction d'ouverture de sorte à rapprocher le ou les éléments de fixation 14 du ou des logements 16 correspondants. Lorsque l'un des éléments de fixation 14 est une patte 24, l'élément d'ancrage 26 est placé dans l'orifice 28 de sorte à permettre l'introduction de la patte 24 dans son logement 16, puis l'élément d'obturation 4 est déplacé en translation selon la direction de déverrouillage perpendiculaire à la direction d'ouverture de sorte à introduire la patte 24 dans le logement 16 en regard d'un bord de celle-ci et à placer celle-ci dans sa position verrouillée. L'élément d'obturation 4 est ensuite déplacer à nouveau selon la direction d'ouverture pour introduire les éléments de fixation 14 du type éléments d'encliquetage 18 dans leur logement correspondant 16 et faire coopérer ceux-ci avec ces logements 16.

L'élément d'obturation 4 est alors en position de fermeture. Pour faire passer l'élément d'obturation 4 dans la position d'ouverture, les opérations inverses sont effectuées. On fait tout d'abord sortir les éléments d'encliquetage 18 puis les pattes 24 de leur logement en plaçant les pattes 24 dans leur position déverrouillée. L'élément d'obturation 4 peut alors se déplacer dans la position d'ouverture, dans laquelle l'élément d'obturation 4 est maintenu sur le corps principal 2 par l'élément d'ancrage 26 et dans laquelle l'ouverture 6 est accessible.

Si l'on souhaite démonter l'élément d'obturation 4, il suffit alors à partir de la position d'ouverture de faire subir une rotation à l'élément d'obturation 26 pour le placer dans la position de démontage.

L'élément d'ancrage 26 permet d'assurer un maintien de l'élément d'obturation 4 sur le corps principal 2 lorsque l'élément d'obturation 2 est en position d'ouverture ou lorsque le ou les éléments de fixation désolidarisent l'élément d'obturation 2. Pour autant, l'élément d'ancrage 26 n'empêche pas un démontage simple de l'élément d'obturation.

## Revendications

1. Ensemble structurel pour véhicule comprenant un corps principal (2) pourvu d'une ouverture (6) et un élément d'obturation (4) de l'ouverture s'étendant dans ladite ouverture (6), et étant fixé au corps principal (2) par au moins un élément de fixation (14), l'élément d'obturation (4) étant mobile en translation selon une direction d'ouverture par rapport au corps principal (2) entre une position de fermeture et une position d'ouverture, l'élément d'obturation (4) comprenant un élément d'ancrage (26) introduit dans un orifice (28) du corps principal (2) et étant apte à retenir l'élément d'obturation (4) sur le corps principal (2) en cas de désolidarisation de l'élément de fixation (14), ledit élément d'ancrage (26) autorisant une rotation de l'élément d'obturation (4) par rapport au corps principal (2) autour d'un axe de rotation sensiblement parallèle à la direction d'ouverture lorsque l'élément d'obturation (4) est dans la position d'ouverture, **caractérisé en ce que** l'élément d'obturation (4) est mobile en rotation autour de l'axe de rotation entre une position d'ancrage, dans laquelle l'élément d'ancrage (26) retient l'élément d'obturation (4) sur le corps principal (2) lorsque l'élément d'obturation (4) est dans la position d'ouverture, et une position de démontage, dans laquelle l'élément d'ancrage (26) peut être retiré de l'orifice (28) du corps principal (2) pour séparer l'élément d'obturation (4) du corps principal (2).

2. Ensemble structurel selon la revendication 1, dans lequel l'élément d'ancrage (26) est mobile en translation selon la direction d'ouverture dans l'orifice (28) du corps principal (2) lorsque l'élément d'obturation (4) se déplace entre la position d'ouverture et la position de fermeture.

3. Ensemble structurel selon la revendication 1 ou 2 dans lequel l'élément d'ancrage (26) présente la forme d'une ancre comprenant au moins un épaulement (32) apte à coopérer avec un bord de l'orifice (28) du corps principal (2) pour retenir l'élément d'obturation (4) sur le corps principal (2) en cas de désolidarisation de l'élément de fixation (14).

4. Ensemble structurel selon l'une quelconque des revendications 1 à 3, dans lequel l'élément de fixation (14) est mobile en translation selon une direction de déverrouillage sensiblement perpendiculaire à la direction d'ouverture entre une position verrouillée dans laquelle l'élément de fixation (14) coopère avec un logement (16) correspondant du corps principal (2) et une position déverrouillée dans laquelle l'élément de fixation (14) est retiré du logement (16) lors du passage de l'élément d'obturation (4) de la position de fermeture à la position d'ouverture.

5. Ensemble structurel selon la revendication 4, dans lequel l'élément d'ancrage (26) se déplace en translation dans l'orifice (28) du corps principal (2) selon la direction de déverrouillage et maintient l'élément d'obturation (4) sur le corps principal (2) lorsque l'élément de fixation (14) est déplacé entre sa position verrouillée et sa position déverrouillée.

6. Ensemble structurel selon l'une quelconque des revendications 1 à 5, dans lequel l'élément de fixation (14) ne fixe pas l'élément d'obturation (4) au corps principal (2) dans la position d'ouverture.

7. Ensemble structurel selon l'une quelconque des revendications 1 à 6, dans lequel l'élément d'obturation (4) comprend une pluralité d'éléments de fixation (14), dont au moins un coopère avec le corps principal (2) par encliquetage.

8. Ensemble structurel selon l'une quelconque des revendications 1 à 7, dans lequel l'élément d'ancrage (26) présente une longueur, mesurée selon la direction d'ouverture, supérieure à la longueur de l'élément de fixation (14).

9. Ensemble structurel selon l'une quelconque des revendications 1 à 8, dans lequel le corps principal (2) est un corps de planche de bord de véhicule et dans lequel l'élément d'obturation (4) est un couvercle de trappe d'accès à un élément fonctionnel disposé dans le corps de planche de bord.

## Patentansprüche

1. Baugruppe für ein Fahrzeug, umfassend einen mit einer Öffnung (6) versehenen Hauptkörper (2) und ein Element (4) zum Verschließen der Öffnung, das sich über die Öffnung (6) erstreckt und an dem Hauptkörper (2) durch mindestens ein Befestigungselement (14) befestigt ist, wobei das Verschlusselement (4) translatorisch gemäß einer Öffnungsrichtung in Bezug auf den Hauptkörper (2) zwischen einer Verschlussposition und einer Offenposition beweglich ist und ein Verankerungselement (26) umfasst, das in eine Öffnung (28) des Hauptkörpers (2) eingeführt ist und geeignet ist, das Verschlusselement (4) an dem Hauptkörper (2) im Falle des Lösens des Befestigungselements (14) zu halten, wobei das Verankerungselement (26) eine Drehung des Verschlusselements (4) in Bezug auf den Hauptkörper (2) um eine im Wesentlichen parallel zu der Öffnungsrichtung liegende Drehachse gestattet, wenn das Verschlusselement (4) in der Offenposition ist, **dadurch gekennzeichnet, dass** das Verschlusselement (4) um die Drehachse zwischen einer Verankerungsposition, in der das Verankerungselement (26) das Verschlusselement (4) an dem Hauptkörper (2) hält, wenn das Verschlusselement (4) in der Offenposition ist, und einer Ausbauposition, in der das Verankerungselement (26) aus der Öffnung (28) des Hauptkörpers (2) herausziehbar ist, um das Verschlusselement (4) vom Hauptkörper (2) zu trennen, drehbeweglich ist.

2. Baugruppe nach Anspruch 2, bei der das Verankerungselement (26) translatorisch gemäß der Öffnungsrichtung in der Öffnung (28) des Hauptkörpers (2) beweglich ist, wenn das Verschlusselement (4) sich zwischen der Offenposition und der Verschlussposition verschließt.

3. Baugruppe nach Anspruch 1 oder 2, bei der das Verankerungselement (26) die Form eines Ankers aufweist und mindestens eine Schulter (32) umfasst, die geeignet ist, mit einem Rand der Öffnung (28) des Hauptkörpers (2) zusammenzuarbeiten, um im Falle des Lösens des Befestigungselements (14) das Verschlusselement (4) an dem Hauptkörper (2) zu halten.

4. Baugruppe nach einem beliebigen der Ansprüche 1 bis 3, bei der das Befestigungselement (14) translatorisch gemäß einer Entriegelungsrichtung, die im Wesentlichen senkrecht zur Öffnungsrichtung ist, zwischen einer verriegelten Stellung, in der das Befestigungselement (14) mit einer korrespondierenden Aufnahme des Hauptkörpers (2) zusammenarbeitet, und einer entriegelten Stellung beweglich ist, in der bei dem Übergang des Verschlusselements (4) von der Verschlussposition in die Offenposition das Befestigungselement (14) aus der Aufnahme (16) herausgezogen ist.

5. Baugruppe nach Anspruch 4, bei der das Verankerungselement (26) sich translatorisch in der Öffnung (28) des Hauptkörpers (2) gemäß der Entriegelungsrichtung verschiebt und das Verschlusselement (4) an dem Hauptkörper (2) hält, wenn das Befestigungselement (14) zwischen seiner verriegelten Stellung und seiner entriegelten Stellung verschoben wird.

6. Baugruppe nach einem beliebigen der Ansprüche 1 bis 5, bei der das Befestigungselement (14) in der Offenposition das Verschlusselement (4) nicht an dem Hauptkörper (2) befestigt.

7. Baugruppe nach einem beliebigen der Ansprüche 1 bis 6, bei der das Verschlusselement (4) eine Mehrzahl von Befestigungselementen (14) aufweist, von denen mindestens eines durch Verrasten mit dem Hauptkörper (2) zusammenarbeitet.

8. Baugruppe nach einem beliebigen der Ansprüche 1 bis 7, bei der das Verankerungselement (26) eine Länge aufweist, gemessen in der Öffnungsrichtung, die größer als die Länge des Befestigungselements (14) ist.

9. Baugruppe nach einem beliebigen der Ansprüche 1 bis 8, bei der der Hauptkörper (2) ein Körper eines Armaturenbretts des Fahrzeugs ist und bei der das Verschlusselement (4) ein Fachdeckel für den Zugang zu einem Funktionselement ist, das in dem Körper des Armaturenbretts angeordnet ist.

## Claims

1. Structural assembly for a vehicle comprising a main body (2) provided with an opening (6) and a closure element (4) for the opening extending in said opening (6) and being affixed to the main body (2) by at least one fastening element (14), the closure element (4) being movable in translation in a direction of opening relative to the main body (2) between a position of closure and a position of opening, the closure element (4) comprising an anchoring element (26) inserted in an aperture (28) of the main body (2) and being suitable for retaining the closure element (4) on the main body (2) in the event of detachment of the fastening element (14), said anchoring element (26) allowing a rotation of the closure element (4) relative to the main body (2) about an axis of rotation substantially parallel to the direction of opening when the closure element (4) is in the position of opening, **characterized in that** the closure element (4) is movable in rotation about the axis of rotation between an anchoring position, in which the anchoring element (26) retains the closure element (4) on the main body (2) when the closure element (4) is in the position of opening, and a position of detachment, in which the anchoring element (26) may be removed from the aperture (28) of the main body (2) in order to separate the closure element (4) from the main body (2).

2. Structural assembly according to Claim 1, in which the anchoring element (26) is movable in translation in the direction of opening in the aperture (28) of the main body (2) when the closure element (4) moves between the position of opening and the position of closure.

3. Structural element according to Claim 1 or 2, in which the anchoring element (26) has the form of an anchor comprising at least one shoulder (32) suitable for interacting with an edge of the aperture (28) of the main body (2) in order to retain the closure element (4) on the main body (2) in the event of detachment of the fastening element (14).

4. Structural assembly according to any one of Claims 1 to 3, in which the fastening element (14) is movable in translation in a direction of unlocking substantially perpendicular to the direction of opening between a locked position, in which the fastening element (14) interacts with a corresponding housing (16) of the main body (2), and an unlocked position, in which the fastening element (14) is removed from the housing (16) upon passage of the closure element (4) from the position of closure to the position of opening.

5. Structural assembly according to Claim 4, in which the anchoring element (26) moves in translation in the aperture (28) of the main body (2) in the direction of unlocking and holds the closure element (4) on the main body (2) when the fastening element (14) is moved between its locked position and its unlocked position.

6. Structural assembly according to any one of Claims 1 to 5, in which the fastening element (14) does not fasten the closure element (4) to the main body (2) in the position of opening.

7. Structural assembly according to any one of Claims 1 to 6, in which the closure element (4) comprises a plurality of fastening elements (14), at least one of which interacts with the main body (2) by means of snap-fitting.

8. Structural assembly according to any one of Claims 1 to 7, in which the anchoring element (26) has a length, measured in the direction of opening, that is greater than the length of the fastening element (14).

9. Structural assembly according to any one of Claims 1 to 8, in which the main body (2) is a vehicle dashboard body and in which the closure element (4) is a cover for an access hatch to a functional element arranged in the dashboard body.
